# EUROPEAN PATENT SPECIFICATION

(11) **EP 2 055 434 B1**
(45) Date of publication and mention of the grant of the patent: **30.04.2014**
(21) Application number: 07791515.5
(22) Date of filing: 27.07.2007
(51) Int. Cl.: A61C 1/00, B25B 23/142, A61C 1/18, A61C 8/00, B25B 13/48, B25B 23/00

(54) **DRIVER WITH TAIL**
SCHRAUBENDREHER MIT SCHWANZ
PILOTE AVEC QUEUE

(30) Priority: 31.07.2006 JP 2006208053
(43) Date of publication of application: 06.05.2009
(73) Proprietor: Takahashi, Atsushi, Tsuruga-shi, Fukui 914-0814 (JP)
(72) Inventor: Takahashi, Atsushi, Tsuruga-shi, Fukui 914-0814 (JP)
(74) Representative: Blasberg, Tilo
(86) International application number: PCT/JP2007/064821
(87) International publication number: WO 2008/015985

(56) References cited:
- DE-A1- 2 502 928
- DE-A1- 4 200 364
- DE-U1- 20 210 696
- FR-A1- 2 555 890
- JP-A- 11 099 484
- JP-A- 2001 277 144
- JP-B- 40 022 640
- JP-U- 07 033 570
- JP-U- 58 093 465
- JP-U- 59 105 377
- US-A- 4 321 040
- US-A- 4 876 929

## Description

### BACKGROUND OF THE INVENTION

### Field of the Invention

The invention relates to a screw driver, and more particularly, to a screw driver with tail, used within a limited area.

### Description of the Related Art

A small screw driver made of antibiotic material is utilized in dentistry profession or surgery operation to tighten or loosen screws. Particularly, in a limited area, such as an oral cavity, a small screw driver is required, which is, however, difficult to operate. Additionally, because the screw driver is of such small size, swallowing of the screw driver by patients is always of great concern. To prevent such an event from occurring, conventionally, a hole is formed on the main body of the screw driver, so that dental floss can pass through the hole, wherein about 20 cm in length of the dental floss can remain outside of the oral cavity for recovery of the screw driver. If the screw driver falls into a patient's throat and is swallowed, the dental floss can be used to pull out the screw driver from the patient's throat. Meanwhile, during usage of the screw driver, visibility of the main body of the screw driver is difficult. Thus, mechanical mechanisms, such as a torque driver or a torque ratchet are used to measure the tightening torque of the screw driver. However, conventional screw drivers used in limited areas have disadvantageous.

First, because dental floss does not have shape properties, during operation of the screw driver, the dental floss may obstruct rotation of the screw driver or the dental floss may get entangled within the oral cavity of the patient (e.g. tongue or teeth). Additionally, for antibiotic purposes during dental surgery, a conventional dental floss is not suitable. Next, to operate the screw driver with precise torque, a torque sensor comprising a strain gauge disposed on a sensor plate is preferred rather than mechanical mechanisms. However, screw drivers with torque sensors integrated with display devices occupy much space, which is not suitable for operation within a limited area. Additionally, for display devices in oral cavities are difficult to view. Meanwhile, for a torque sensor that is separated from the display device, a wire connecting the torque sensor and the display device may obstruct the rotation of the screw driver like the dental floss.

Since it is dangerous to swallow the screw driver, a dental floss is tightened to the screw driver. In case the screw driver falls, it can be pulled up with the dental floss. The dental floss, however, has no toughness; it can obstruct the rotation of the screw driver or wind around the lips or tongue when it is operated in the wet oral cavity or bleeding portions. For the antibiotic purpose, the dental floss is also not suitable.

In addition, to operate the screw driver with precise torque, a torque sensor comprising strain gauge disposed on a sensor plate is preferred rather than the mechanical type one. However, it occupies considerable space in the narrow oral cavity for the type of the torque sensor integrated with a display device, and it's difficult to recognize the display device when used in a closed space. For the type of torque sensor separated from the display device, a wire connecting the torque sensor and the display device may obstruct the rotation of the screw driver like the dental floss.
DE 202 10 696 U1 discloses a dental screw driver according to the preamble of claim 1, comprising a shaft having a tip blade disposed on one side of a rotation shaft of a handle body and a wire element which is guided in a guiding sleeve and configured to rotate to drive the tip blade for rotation. The connection of the wire element with the handle body is, however, prone to overstraining and extreme bending, in particular if the screw driver is used in limited areas.
FR 2 555 890 A1 discloses a fall-prevention device for dental instruments, consisting of a handle having in its diameter an orifice of large diameter and in its axis an orifice of small diameter. A wire fitted with a ball is introduced simultaneously into both holes and until the ball is housed in the orifice of large diameter. The device according to D2 is in particular intended for intra-canal and dental instruments. While the connection of the wire element with the handle body enables extreme flexure and bending, this connection is not configured for driving a rotation of a tool, such as a tip blade of a screw driver.
DE 42 00 364 A1 discloses measurement elements for measuring the force transmitted and the torque of a dental instrument. The measurement elements are configured for producing electrical signals depending on tension, pressure or torsion and can be used in limited areas, such as in the opened mouth of a patient. The system enables tightening up of a screw connection according to necessary parameters.
US 4,876,929 discloses a cordless portable electric screwdriver having a chuck for normally holding a tool for rotary driven motion at one end thereof and a flexible extension shaft having a first end adapted to cooperate with said chuck and a second end adapted to hold said tool for rotary driven motion. The flexible extension can be deflected relative to the axis of the chuck so as to position the second end of the shaft and the tool at an acute angle relative thereto.

### BRIEF SUMMARY OF INVENTION

It is an object of the present invention to provide an improved screw driver with a tail that can be used in a more convenient and effective manner in limited areas, such as an opened mouth of a patient.

This problem is solved by a screw driver with a tail according to claim 1. Further advantageous embodiments are the subject-matter of the dependent claims.

The screw driver is made of an antibiotic material, which can be disinfected by a high pressure disinfector or a supersonic cleaner. Such a screw driver can be used in a limited area such as an oral cavity to rotate effectively therein. The screw driver is also prevented from falling into the throat of a patient or in difficult to reach areas. Additionally, efficient viewing of rotation amount, angle or torque is accomplished even in the moral teeth portion.

The screw driver with tail has a wire element, which is made of metal or resin with flexible and recoverable property, or a rope-shaped shaft formed by the wire element disposed on the open side opposite to the tip blade corresponding to screw heads with plurality of engaging shapes. A rotation gauge displaying the rotation torque is disposed on the open end of the rope-shaped shaft. A signal from a tightening torque sensor disposed in a handle body and is sent via a signal line constituting the rope-shaped shaft or a part of the rope-shaped shaft. The structure is formed in such a manner that the rotation of the rope-shapcd shaft and the handle body disposed on the open end of the rope-shaped shaft is not obstructed, and the rope-shaped shaft and the handle body can rotate co-axially. The screw driver has a display device to indicate tightening torque for any rotation position of the handle body and the rope-shaped shaft.

The screw driver with tail has the following effects.

Due to the slightly curved shape of the wire element or rope-shaped shaft made of metal or resin of the invention, swallowing or loss of the screw driver when used within limited areas are prevented. Specifically, the wire element or a rope-shaped shaft of the invention remains outside of the oral cavity to prevent swallowing or loss. Additionally, the wire element or the rope-shaped shaft is flexible and soft, so that when used, deformation can occur to avoid interference by teeth, gums or lips. After deformation, the wire element or the rope-shaped shaft automatically recovers to a slightly curved shape

Additionally, for efficient viewing of rotation information, in an embodiment a rotation gauge is disposed on the open end of the tail to rotate simultaneously with the screw driver.

Meanwhile, a ball stud joining the wire element or the rope-shaped shaft in the first or second invention to the center of a ball engages with a slide bearing, which is disposed on the handle body and has a spherical contact surface, whereby the rope-shaped shaft can do swinging, inclined moving or rotation.

A rotation constrain means such as a rotation constrain pin mechanism is disposed in the ball or slide bearing of a ball joint mechanism. The rope-shaped shaft can swing, inclined move or rotate in a predetermined angle range limited by the ball joint mechanism and rotates along with the handle body simultaneously.

The screw driver of further comprises a tail flexible shaft structure comprising a flexible tube rotatably disposed in such a manner that the rope-shaped shaft of the first, second or third invention passes through the flexible tube to become a core shaft, whereby the rotating rope-shaped shaft is avoided to touch teeth, gums or lips when the tail flexible shaft rotates.

The flexible tube has shape maintain property, whereby the tail flexible shaft can be bent to arbitrary angle and direction and maintained in a specific shape.

The flexible tube of the invention has shape recovery property, whereby the core shaft is maintained in a linear shape and the friction resistance of the core shaft is reduced to minimum.

The screw driver comprises a torque display portion including a tightening torque sensor disposed in the handle body, and a shaft comprising a signal lead constituting the rope-shaped shaft or a part of the rope-shaped shaft to transfer signals of the tightening torque sensor, wherein the torque display portion has a circular shape concentric with the rope-shaped shaft and the rotational shaft of the handle body, or the torque display portion has a display device disposed in a housing concentrically with the rope-shaped shaft and the rotational shaft of the handle body. The tightening torque indication means is light, sound, or digital display on a small cross section of one side of the housing opposite to the side connected to the shaft.

The screw driver further comprises a core shaft having an open end connected to a driving shaft of a power device; a flexible shaft having one end and a tube on the end connected to a driving device case to which the power device is fixed and the other end connected to a handle cover capable of sliding in an axial direction of the handle body and rotatebly holding the handle body with respect to the rotational shaft; a lock mechanism engaging the handle body and the handle cover when the handle cover sliding toward a screw; an open coil spring releasing the engagement of the handle body and the handle cover, wherein the rotation of the screw is operated by the power from the power device, and the handle cover slides toward the screw to be operated and is engaged with the handle body, whereby the screw is tightened or untightened by fingers.

The screw driver with tail can be operated in an oral cavity. When the screw driver falls accidentally, the screw driver is avoided to be swallowed by pulling the tail up. When the tip blade corresponding to the screw heads is held by fingers and vertically pushed and rotated, in the moral teeth portion which is hard to keep vertical distance, the wire element or the rope-shaped tail shaft made of metal or resin can deform easily by its softness, flexibility and recovery property if the shaft interferes with teeth and gums. At the same time, the rope-shaped tail shaft has slightly curved shape and is kept outside the oral cavity. When the handle body is rotated to tighten or loosen screws, the rope-shaped tail shaft does not obstruct the operation caused by interference with the teeth, gums or lips. In case the screw driver falls, the tail shaft outside the oral cavity is pulled to avoid the screw driver entering weasand.

Since a rotation gauge is disposed on the other end of the rope-shaped tail shaft outside the oral cavity, even the handle body is hidden in certain operation conditions, the rotation direction or rotation amount can be indicated by the rotation gauge.

The handle body is joined to the tail shaft by a ball join mechanism. When the tail shaft interferes with teeth or gums, the flexible tail shaft deforms and the join angle of the handle body and the tail shaft can be varied up to 90° within the angle range of the ball join mechanism. As the tail shaft can rotates freely, when the tail shaft is inserted into the handle body, even such a position behind the handle body where may have limited space and exceed the critical limit of the flexibility, softness and recovery property of the tail shaft, the tail shaft can still be kept in specific positions outside the oral cavity and functioned to avoid the falling of the screw driver.

In addition, when the ball joint mechanism serves as a rotation limit mechanism, tail shaft can rotates in the range set by the ball joint mechanism and change the join angle with the handle body to solve the limit space problem behind the handle body. At the same time, the handle body and the tail shaft rotates integrally. As long as the rotation gauge is disposed on the tail shaft, the rotation amount and rotation direction of the screw driver can be aware. Since the rotation limit mechanism can transfer rotation torque from different directions, the rotation gauge can serve as a handle and the handle body is rotated by a rigid shaft, and a larger torque generated by lever effect can be used to tighten or loosen the screw. Of course, a torque wrench engaged with the rotation gauge can also be used.

In the ball join mechanism, on which a rotation constrain element is disposed, when the handle body is rotated, tail shaft interfere the teeth, gums or lips and obstructs the rotation of screw driver due to insert position and angle, or the lips may be hurt by the rub of the tail shaft. The tail shaft acts as a core shaft passing through a flexible tube to constitute a flexible shaft which prevent the tail shaft from rubbing the tissue near the tail shaft. The tube reduces the rotation resistance of the shaft and maintains the stable rotation of the shaft.

A tube has shape maintain property. The flexible shaft is maintained in specific direction and angle outside the oral cavity in advance. When the screw driver is operated, the flexible shaft is in a position without obstructing the insertion of finger and the rotation of the handle body. At the same time, the flexible shaft can also be maintained in a direction without being hidden.

In addition, when a thin wire of metal or resin or a rope-shaped shaft formed by the wire is used, the shaft has no sufficient toughness for recovering shape. The tube has a shape recover property which recovers shape by sufficient flexibility and softness and maintains a slightly curved shape along with the screw driver. At the same time, since the tail shaft is kept outside the oral cavity and has the least friction resistance for rotation, the handle body is easily rotated when the screw driver is operated.

The shaft or a part of the shaft constituting the screw driver with tail is formed by a signal line. In the torque sensor driver displaying the signal of the tightening torque sensor disposed in the handle body on the other end of the shaft, when the screw driver is rotated, the display device is rotated along with the shaft. The display device has a spherical shape or the tail shaft and the rotational shaft has concentric circular cross section, whereby the rotation resistance caused by the interference of the display device is reduced when the screw driver is operated. The entire display device or a part of the display device is disposed in a housing, whereby the rotation resistance can be further reduced. The shaft or a part of the shaft constituted by the signal line can serve as a core shaft passing through the flexible tube, whereby the shaft is prevented from rubbing teeth, gums or lips to further reduce rotation resistance. The tightening torque indication means is light, sound, such as LED or digital display displaying words or symbols on a small cross section of one side of the housing opposite to the side connected to the shaft. The tightening torque can be indicated by the digital display at any rotation angle of the display device. In such a condition, as the flexible shaft is formed by the tube with shape maintain property, when the display device is disposed in any direction outside the oral cavity, the rotation resistance can vanish and the display device is easily seen.

The free end of a shaft passing through the flexible shaft serves as a core shaft is connected to a rotational shaft of a power device, and the tube on the free end is connected to a case of a driving device on which the power device is fixed. The other end is connected to a handle cover capable of sliding in the axial direction of the handle body and rotatebly holding the handle body with respect to the rotational shaft. In a narrow space such as the oral cavity, it is not necessary to hold and rotate the screw driver by fingers at the same time, which takes much labor.

In addition, an open coil spring disposed in the handle cover is used to release the engagement of the handle body and the handle cover. When the handle cover slides toward the screw, the screw can be tightened or loosened by finger with the engagement of the handle body and the handle cover, whereby the required torque from the power device is minimal. In such a condition, the rotation of the handle body and the handle cover can be 90°, which is a very small rotation. In this way, the handle cover is not needed to return and can have an excellent operation effect.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:
Fig. 1 is a schematic view of a screw driver with a tail;
Fig. 2 depicts a screw driver having a shaft co-axial with the rotational shaft of a handle body, rotating and moving in a predetermined angle range, and a screw driver A having a rotation constraint mechanism co-axially rotating with the rotational shaft of the handle body, rotating and moving in a predetermined angle range;
Fig. 3 depicts a screw driver having a flexible shaft with a flexible tube through which a shaft passes;
Fig. 4 depicts a screw driver rotating screws by a power device;
Fig. 5 is a schematic view of a lock mechanism of the handle of the screw driver of Fig. 4;
Fig. 6 depicts a screw driver having a flexible shaft connected to a handle body via a universal joint mechanism; and
Fig. 7 depicts a screw driver having a torque display device disposed in a housing and co-axially with the rotational shaft of the handle body, being digitally displayed on a small cross section on a side opposite to the side of torque display device connected to the shaft.

### DETAILED DESCRIPTION OF INVENTION

The embodiments of the invention are described a follows.

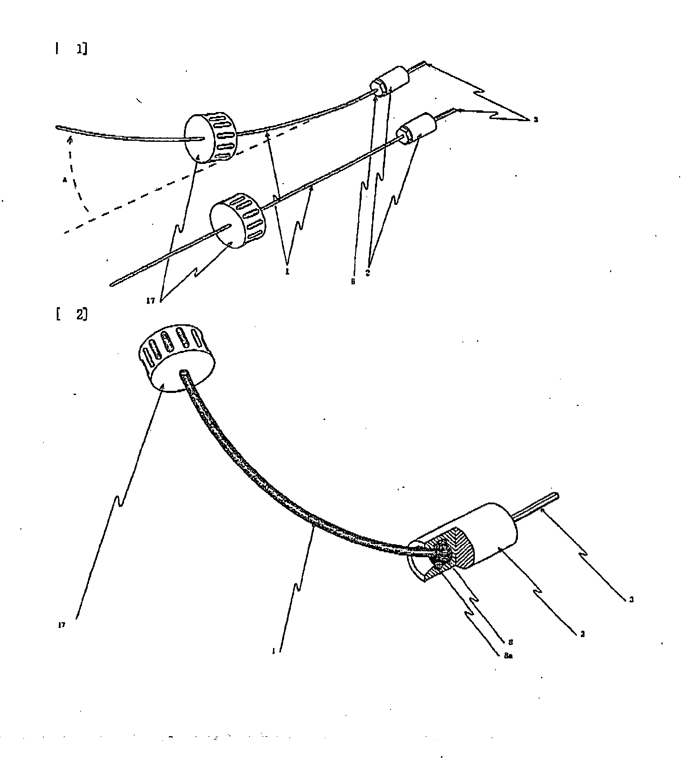

Figs. 1 to 6 depict an embodiment of a screw driver. The same elements in Fig. 1 to 6 are referred to by the same numbers. The tip blade of a screw driver is the same as conventional screw drivers.

Referring to Fig. 1, a screw driver with a tail comprises a tip blade 3, a handle body 2 coaxially connected to the tip blade 3 and rotatable by fingers, and a shaft 1 coaxially connected to a handle body 2 on one side opposite to the side where the handle body 2 is coaxially connected to the tip blade 3. The shaft 1 comprises metal or resin wire and is rope-shaped. When teeth, gums or lips interfere with the shaft 1 and it is deformed, the shaft 1 can easily recover a shape A due to its flexibility. When the stress causing the deformation is removed, the shaft 1 recovers to its original shape, which is linear or slightly curved. Additionally, when utilized, the shaft 1 has an appropriate length that extends outside of the oral cavity when in an original shape. Thus, should the screw driver fall into the oral cavity, the shaft 1 can be pulled to prevent the screw driver from falling into the throat. In addition, since the shaft 1 is made of resin or metal, it is easily sterilized or disinfected.

Referring to Fig. 2B, the shaft 1 is connected to a handle body 2 by a ball joint mechanism. A ball stud 8 joining the shaft 1 to the center of the ball is disposed on a rotational shaft of the handle body 2. Thus, the shaft 1 can rotate and move with respect to the handle body 2 by the ball joint mechanism which is pushed from the C direction of the slide bearing 20 having a C ring 18 set on a C ring stopper 19. A rotation constrain pin 8a is disposed on the slide bearing 20 and the ball of the ball joint mechanism as shown in Fig. 2A to constrain rotation of the ball. In such a structure, the shaft 1 can rotate and move within a predetermined angle range set by the ball joint mechanism, wherein the shaft 1 rotates simultaneously with the handle body 2.

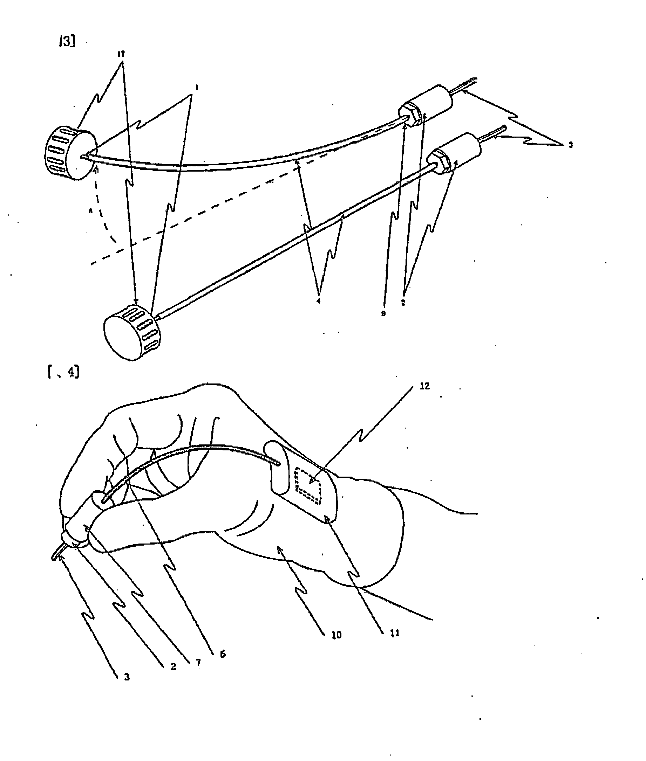

The straightness recovery property of the shaft 1 proportionally inverse to the deformation of the shaft 1. The flexible shaft structure shown in Fig. 3 has a flexible tube 4 rotatably covering the shaft 1, so that the shaft 1 does not negatively influence surrounding impediments such as teeth, gums or lips when the shaft 1 rotates along with the handle body 2. As the flexible tube 4 has shape maintain property, the direction and angle of the flexible shaft can be maintained to a specific condition. As the flexible tube 4 has shape recover property, the flexible shaft structure can be maintained to be substantially linear, so that rotation resistance of the shaft 1 (core shaft) can be reduced to a minimum. If a rotation gauge 17 is disposed on the other end of the shaft 1, when the handle body 2 is rotated by the finger or a torque wrench engaging a torque wrench engaging portion 9 to tighten or loosen screws, the rotation gauge 17 on the open end of the shaft 1 outside the oral cavity rotates coaxially, whereby the rotation amount or rotational direction of the tip blade 3 can be viewed.

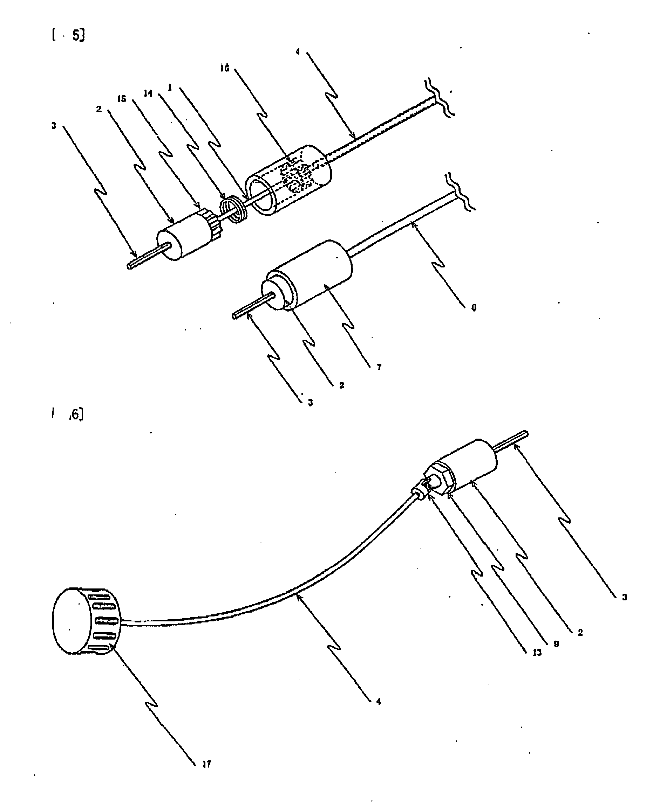

Fig. 4 shows the operation of tightening or loosening screws, performed by a power device. The open end of the shaft 1 serves as a core shaft 6 which is connected to a rotational shaft of the power device 11. One end of a tube is fixed to a housing 11 of the power device. The other end of the tube is connected to a handle cover 7 sliding axially on the handle body 2 and capable of rotating about the shaft 1. For such a structure, the screw driver is rotated by the power device, such as a motor, rather than the handle body. Referring to Fig. 5, an open coil spring 14 disposed in the handle cover 7 releases the engagement of the handle body 2 and the handle cover 17 caused by the lock mechanism 15, 16. When the handle cover 7 slides toward the screw for tightening or loosening operations, the lock mechanism 15, 16 joins the handle body 2 and the handle cover 7, whereby the screw can be manually tightened or loosened. Fig. 6 shows a structure having a universal joint for joining the shaft 1 and the handle body 2. The universal joint can transfer moment from different direction. The rotation gauge 17 connected to the shaft 1 serves as another handle, and the handle body 2 is rotated via the shaft 1, whereby a lever effect, exerts a larger force to tighten or loosen screws.

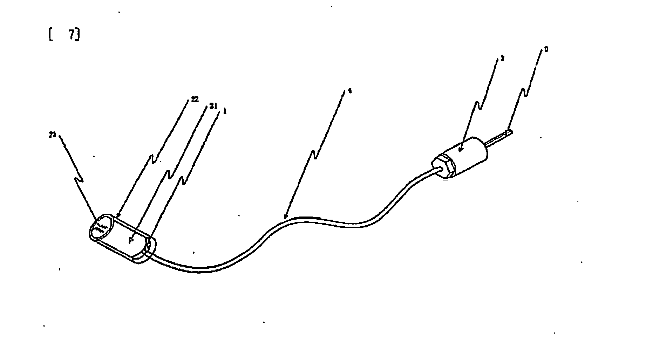

Fig. 7 shows a screw driver with a torque sensor, and a display device. When the screw driver rotates, a torque display portion 21 is rotated along with the rotation of the shaft 1 which comprises a signal line. The display portion 21 is rotatably disposed in the case 22 and entirely or partially covered by the case 22, so that rotation resistance is reduced. The core of the shaft 1 rotatably passes through the flexible tube 4 connected to the case 22, whereby the shaft I does not contact surrounding impediments such as teeth, gums or lips directly, so that rotation resistance is further reduced. The flexible tube 4 has shape maintain property. The display portion 21 is positioned for convenient observation and does not obstruct screw tightening or loosening operations. Thus, the tightening torque of the screw driver can be indicated by the digital display. In addition to liquid crystal displays, the display can also be made of LEDs disposed on the display portion 21 or combinations thereof. Meanwhile, a speaker can be disposed on the display portion or combinations thereof. The display portion 21 can be detachably disposed on a junction of the case 22 and the shaft 1 or a junction of the handle body 2 and the shaft 1, whereby display portion 21 can be detached when sterilizing or disinfecting the shaft 1.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

The screw driver with a tail inhibits swallowing of the screw driver by a patient or loss of the screw driver when operated within a limited area. The screw driver is applicable for all screw tightening or loosening operations required within a limited area.

## Claims

1. A screw driver with a tail, comprising
a shaft (1) having a tip blade (3) corresponding to screw heads with a plurality of engaging shapes, disposed on one side of a rotational shaft of a handle body (2) to be held by finger tips and rotating; and
a wire element, made of metal or resin, or a rope-shaped shaft disposed on the other side of the rotational shaft of the handle body (2) opposite to the side connected to the tip blade (3);
**characterized in that** said screw driver with a tail further comprises a ball stud (8) disposed on the handle body (2) and connected to the wire element or rope-shaped shaft, wherein the ball stud (8) sets a rotation movement of the wire element or rope-shaped shaft such that the wire element or rope-shaped shaft rotates simultaneously with the handle body.

2. The screw driver with tail as claimed in claim 1, wherein a rotation gauge (17) is disposed on the other side of the rope-shaped shaft (1).

3. The screw driver with tail as claimed in claim 1 or 2, further comprising a tail flexible shaft structure comprising a flexible tube (4) rotatably disposed in such a manner that the rope-shaped shaft (1) passes through the flexible tube (4) to be a core shaft.

4. The screw driver with tail as claimed in claim 3, wherein the flexible tube (4) has shape maintaining properties.

5. The screw driver with tail as claimed in claim 3, wherein the flexible tube (4) has shape recovering properties.

6. The screw driver with tail as claimed in claim 1, or 3, further comprising a tightening torque sensor disposed in the handle body, and a torque display portion (21) disposed on one end of the rope-shaped shaft (1), wherein the rope-shaped shaft comprises a signal lead constituted by the rope-shaped shaft or a part of the rope-shaped shaft to transfer signals of the tightening torque sensor, wherein the torque display portion has a circular shape concentric with the rope-shaped shaft and the rotational shaft of the handle body, or the torque display portion has a display device disposed in a housing concentrically with the rope-shaped shaft and the rotational shaft of the handle body, and the tightening torque is indicated by light, sound, or digital display on a small cross section of one side of the housing opposite to the side of torque display portion connected to the shaft.

7. The screw driver with tail as claimed in claim 3, further comprising:
a lock mechanism (15, 16) engaging the handle body (2) and the handle cover (7) when the handle cover slides toward a screw to be screwed; and
an open coil spring (14) releasing engagement of the handle body and the handle cover,
wherein the core shaft (6) has an open end connected to a driving shaft of a power device (11), and the flexible shaft has one end and a tube on the end connected to a driving device case to which the power device is fixed, and the other end connected to a handle cover capable of sliding in the axial direction of the handle body and rotatably holding the handle body with respect to the rotational shaft, and the rotation of the screw is operated by power from the power device, and the handle cover slides toward the screw and is engaged with the handle body, so that the screw is tightened or untightened by fingers.

## Patentansprüche

1. Schraubendreher mit einem auslaufenden Ende, umfassend
eine Welle (1) mit einem vorderen Ende mit Klinge (3), das in Entsprechung zu Schraubenköpfen eine Mehrzahl von Eingriffsformen aufweist und auf einer Seite einer Drehwelle eines Griffkörpers (2) vorgesehen ist, welcher dazu ausgelegt ist, um von Fingerspitzen gehalten zu werden und gedreht zu werden; und
ein Drahtelement aus Metall oder Kunstharz oder eine seilförmige Welle auf der anderen Seite der drehbeweglichen Welle des Griffkörpers (2) gegenüberliegend zu der Seite, die mit dem vorderen Ende mit Klinge (3) verbunden ist;
**dadurch gekennzeichnet, dass** der Schraubendreher mit auslaufendem Ende weiterhin einen Kugelzapfen (8) aufweist, der auf dem Griffkörper (2) vorgesehen ist und der mit dem Drahtelement oder der seilförmigen Welle verbunden ist, wobei der Kugelzapfen (8) eine Drehbewegung des Drahtelements oder der seilförmigen Welle einstellt, sodass das Drahtelement oder die seilförmige Welle sich gleichzeitig mit dem Griffkörper dreht.

2. Schraubendreher mit auslaufendem Ende nach Anspruch 1, wobei eine Drehzahl-Messeinrichtung (17) auf der anderen Seite der seilförmigen Welle (1) angeordnet ist.

3. Schraubendreher mit auslaufendem Ende nach Anspruch 1 oder 2, weiterhin umfassend ein auslaufendes Ende mit einer flexiblen Welle, umfassend ein flexibles Rohr (4), das derart drehbweglich angeordnet ist, dass sich die seilförmige Welle (1) als Wellenkern durch das flexible Rohr (4) hindurch ersteckt.

4. Schraubendreher mit auslaufendem Ende nach Anspruch 3, wobei das flexible Rohr (4) die Eigenschaft hat, dass es seine Form beibehält.

5. Schraubendreher mit auslaufendem Ende nach Anspruch 3, wobei das flexible Rohr (4) die Eigenschaft hat, dass es seine Form wieder einnimmt.

6. Schraubendreher mit auslaufendem Ende nach Anspruch 1 oder 4, weiterhin umfassend einen Anzugsdrehmoment-Sensor, der in dem Griffkörper angeordnet ist, sowie einen Drehmoment-Anzeigeabschnitt (21), der an einem Ende der seilförmigen Welle (1) angeordnet ist, wobei die seilförmige Welle eine Signalleitung aufweist, die von der seilförmigen Welle oder von einem Teil der seilförmigen Welle ausgebildet ist, um Signale von dem Anzugsdrehmoment-Sensor zu übertragen, wobei der Drehmoment-Anzeigeabschnitt kreisförmig und konzentrisch zu der seilförmigen Welle und der drehbeweglichen Welle des Griffkörpers ist, oder wobei der Drehmoment-Anzeigeabschnitt eine Anzeigevorrichtung aufweist, die in einem Gehäuse konzentrisch zu der seilförmigen Welle und der drehbeweglichen Welle des Griffkörpers angeordnet ist, und wobei das Anzugsdrehmoment durch eine Licht- oder Tonanzeige oder eine digitale Anzeige auf einem kleinen Querschnittsabschnitt auf einer Seite des Gehäuses gegenüber derjenigen Seite angezeigt wird, auf der der Drehmoment-Anzeigeabschnitt mit der Welle verbunden ist.

7. Schraubendreher mit auslaufendem Ende nach Anspruch 3, weiterhin umfassend:
einen Verriegelungsmechanismus (15, 16), der mit dem Griffkörper (2) und der Griffabdeckung (7) in Eingriff steht, wenn die Griffabdeckung in Richtung auf eine Schraube, die geschraubt werden soll, gleitet; und
eine offene Schraubenfeder (14), die den Eingriff des Griffkörpers und der Griffabdeckung freigibt,
wobei der Wellenkern (6) ein offenes Ende aufweist, das mit einer Antriebswelle einer Antriebsvorrichtung (11) verbunden ist, und wobei die flexible Welle ein Ende und ein Rohr auf dem Ende aufweist, das mit dem Gehäuse einer Antriebseinrichtung verbunden ist, an welchem die Antriebsvorrichtung befestigt ist, und wobei das andere Ende, das mit der Griffabdeckung verbunden ist, in der axialen Richtung des Griffkörpers gleiten kann und den Griffkörper in Bezug zu der Drehwelle drehbeweglich halten bzw. fixieren kann, und wobei die Drehung der Schraube durch die Antriebskraft der Antriebsvorrichtung angetrieben wird, und wobei die Griffabdeckung in Richtung der Schraube gleitet und in Eingriff mit dem Griffkörper gelangt, so dass die Schraube mit Fingern angezogen oder gelöst wird.

## Revendications

1. Un tournevis à queue , comprenant
un arbre (1) ayant une lame d'extrémité (3) correspondant à des têtes de vis ayant une pluralité de formats de prise, disposé sur un côté d'un arbre de rotation d'une poignée (2) destiné à être maintenu et mise en rotation par le bout des doigts, et
un élément filaire, réalisé en métal ou en résine, ou un arbre en forme de cordage disposé sur l'autre côté de l'arbre de rotation de la poignée (2) opposé au côté fixé à la lame d'extrémité (3);
**caractérisé en ce que** ledit tournevis à queue comprend en outre un pivot à rotule (8) disposé sur la poignée (2) et fixé à l'élément filaire ou à l'arbre en forme de cordage, dans lequel le pivot à rotule (8) définit un mouvement de rotation de l'élément filaire ou de l'arbre en forme de cordage de telle sorte que l'élément filaire ou l'arbre en forme de corde tourne en même temps que la poignée.

2. Tournevis à queue selon la revendication 1, dans lequel une jauge de rotation (17) est disposée sur l'autre côté de l'arbre en forme de cordage (1).

3. Tournevis à queue selon la revendication 1 ou 2, comprenant en outre une structure d'arbre flexible à queue comprenant un tube flexible (4) disposé de manière rotative de telle manière que l'arbre en forme de cordage (1) passe au travers du tube flexible (4) pour former un arbre central.

4. Tournevis à queue selon la revendication 3, dans lequel le tube flexible (4) présente une propriété de maintien de forme.

5. Tournevis à queue selon la revendication 3, dans lequel le tube flexible ( 4) présente des propriétés de mémoire de forme.

6. Tournevis à queue selon la revendication 1 ou 3, comprenant en outre un capteur de couple de serrage disposé dans la poignée, et un afficheur de couple (21) dispose sur une extrémité de l'arbre en forme de cordage (1), dans lequel l'arbre en forme de cordage comporte un fil de signal constitué par l'arbre en forme de cordage ou une partie de celui-ci afin de transférer des signaux du capteur de couple de serrage, dans lequel l'afficheur de couple présente une forme circulaire concentrique avec l'arbre en forme de cordage, et l'arbre de rotation de la poignée, ou l'afficheur de couple comporte un dispositif d'affichage disposé dans un boîtier de manière concentrique avec l'arbre en forme de cordage et l'arbre de rotation de la poignée, et le couple de serrage étant indiqué au moyen d'un affichage visuel, sonore ou d'un affichage numérique sur une petite section transversale d' un côté du boîtier opposé au côté de la partie d'affichage de couple relié à l'arbre .

7. Tournevis à queue selon la revendication 3 , comprenant en outre:
un mécanisme de verrouillage (15, 16) en prise avec la poignée (2) et le couvercle de la poignée (7) lorsque le couvercle de la poignée coulisse vers une vis à visser ; et
un ressort hélicoïdal ouvert (14), libérant l'engagement de la poignée et le couvercle de poignée,
dans lequel l'arbre central (6) comporte une extrémité ouverte reliée à un arbre d'entraînement d'un dispositif de puissance (11), et l'arbre flexible présente une extrémité et un tube sur l'extrémité reliée à un boîtier de dispositif d'entraînement auquel le dispositif de puissance est fixé, et l'autre extrémité étant fixée à un couvercle de poignée pouvant coulisser suivant une direction axiale de la poignée et maintenant en rotation la poignée relativement à l'arbre de rotation, et la rotation de la vis étant opérée via de la puissance générée par le dispositif de puissance, et le couvercle de la poignée coulisse vers la vis et est en prise avec la poignée , en sorte que la vis est serrée ou desserrée via les doigts.
